# DEMANDE DE BREVET EUROPEEN

(11) **EP 3 591 809 A1**
(43) Date de publication de la demande: **08.01.2020**
(21) Numéro de dépôt: 19184805.0
(22) Date de dépôt: 05.07.2019
(51) Int. Cl.: H02K 3/30, H02K 3/02

(54) **STATOR DE MOTEUR ELECTRIQUE**

(30) Priorité: 05.07.2018 FR 1856191
(71) Demandeur: Moteurs Leroy-Somer, 16915 Angouleme (FR)
(72) Inventeur: PETITGAS, Benoit, 16000 ANGOULEME (FR); TANGUY, Nicolas, 16000 ANGOULEME (FR); GIMENEZ, Anne, 16710 SAINT-YRIEIX (FR); LASSOUDIERE, Joël, 16240 VILLEFAGNAN (FR)
(74) Mandataire: Nony

(57) **Abrégé**

L'invention concerne un stator de moteur électrique, comportant au moins un bobinage d'un fil d'un conducteur électrique composé majoritairement d'aluminium recouvert d'une épaisseur de 30 à 100 microns d'un isolant comportant au moins un polymère choisi parmi les polyaryléthercétones (PAEK).

## Description

La présente invention concerne un stator de moteur électrique, et plus particulièrement un stator de moteur de compresseur fonctionnant avec de l'ammoniac comme réfrigérant.

Les gaz fréons sont néfastes pour l'environnement car ce sont des gaz à haut potentiel de réchauffement climatique et qui dégradent la couche d'ozone.

Pour diminuer ces effets négatifs sur l'environnement, l'industrie de la réfrigération, grande utilisatrice de gaz fréons, cherche à les remplacer par des gaz dits plus propres, tels que l'ammoniac.

Plusieurs installations connues utilisent désormais l'ammoniac comme fluide caloporteur. Néanmoins, dans ces installations, le gaz ne circule jamais dans l'entrefer du stator/rotor de la machine tournante. Le moteur, qui entraîne les éléments servant à réaliser la compression du gaz, et appelé compresseur ouvert dans ce type de montage, est situé à l'extérieur du compresseur.

L'invention vise à introduire l'assemblage stator/rotor dans le compresseur. Cet assemblage, autrement appelé groupe semi-hermétique ou hermétique, est plus compact que les installations utilisant des compresseurs ouverts. De plus, dans certaines conditions, ces installations peuvent être aussi efficaces que celles utilisant des gaz fréons.

Par ailleurs, les performances d'une machine tournante dépendent en particulier du conducteur électrique avec lequel elles sont bobinées. Traditionnellement, le cuivre est utilisé du fait de ses bonnes propriétés de conduction électrique et thermique.

La demande JP2004031253 décrit un fil émaillé utilisable dans l'ammoniac. Il est fabriqué à base d'un conducteur en aluminium et d'une isolation en PPS, appliquée avec les procédés existants pour l'émaillage traditionnel.

La demande CN103138451 divulgue un moteur résistant à l'ammoniac avec un fil conducteur en aluminium recouvert de PPS.

Le brevet US8006514 divulgue un conducteur recouvert d'une résine fluorée, ce conducteur étant préférentiellement de l'aluminium.

Le brevet US7082786 décrit un système de réfrigération équipé d'un compresseur scroll fonctionnant avec de l'ammoniac. Le bobinage du moteur d'entraînement du compresseur est un conducteur en aluminium recouvert d'une résine fluorée.

La demande CN205406121 divulgue un conducteur multicouche cuivre / aluminium / aluminium cuivré, isolé par une première couche d'accrochage en polyesterimide, d'une deuxième couche en polyamideimide et d'une troisième couche en polytétrafluoroéthylène.

La demande DE102013017147A1 présente la fabrication d'un compresseur à vis pour application hermétique, utilisant de l'ammoniac comme fluide caloporteur. Le stator du compresseur est bobiné avec un fil conducteur en cuivre, contrairement à l'art antérieur qui s'appuie sur des conceptions avec des fils en aluminium. L'isolation du cuivre fait plusieurs centaines de microns, ce qui limite les capacités de remplissage des encoches, et donc les performances de l'installation.

La difficulté pour un compresseur semi-hermétique fonctionnant dans l'ammoniac, est de trouver des composants, en particulier le fil conducteur électrique avec lequel les bobinages sont réalisés, qui soient compatibles avec la présence d'ammoniac, et ce pendant toute la durée de vie du compresseur.

Les composants dits standards, utilisés dans les machines tournantes non exposées à l'ammoniac, se dégradent très vite dans l'ammoniac, entrainant des défauts d'isolement dans le stator et l'arrêt du compresseur.

L'invention vise à perfectionner encore les stators électriques des moteurs destinés à fonctionner en étant exposés à l'ammoniac, notamment du point de vue des performances électriques et de la longévité d'utilisation.

L'invention atteint cet objectif grâce à un stator de moteur électrique, comportant au moins un bobinage d'un fil d'un conducteur électrique composé majoritairement d'aluminium recouvert d'une épaisseur de 30 à 100 microns d'un isolant comportant au moins un polymère choisi parmi les polyaryléthercétones (PAEK).

Des essais ont mis en évidence qu'un tel stator présentait une excellente résistance à l'ammoniac tout en permettant un bon coefficient de remplissage des encoches, donc des performances électriques élevées. Cela se manifeste par plusieurs points de rendement supplémentaires, comparativement à un stator fabriqué avec des conducteurs en cuivre fortement isolé, tel que défini dans le brevet DE102013017147A1.

L'aluminium, du fait de sa faible conductivité électrique comparativement au cuivre est un inconvénient pour les performances du moteur et donc du compresseur, mais il est compatible avec l'ammoniac. La famille des PAEK présente une tenue remarquable à l'ammoniac, ce qui assure la fiabilité du stator et donc du compresseur.

L'épaisseur fine de l'isolation permet de maintenir un remplissage important, et donc de favoriser une conception compacte.

Comparativement à l'invention, le choix de conducteurs en cuivre isolés par des revêtements de plusieurs centaines de microns, comme envisagé dans la demande DE102013017147A1, a pour conséquences de ne pas pouvoir remplir les encoches du stator de manière importante, avec une perte de 20 à 50% d'un remplissage standard.

L'invention permet ainsi un coefficient de remplissage proche d'un remplissage standard.

De préférence, l'isolant comporte au moins un polyaryléthercétone (PAEK), et de préférence est réalisé en PEEK.

De préférence, le taux de remplissage des encoches du stator est meilleur que 50%. Le taux de remplissage est défini comme étant le ratio entre la section totale de conducteur électrique dans l'encoche et la section totale de l'encoche.

Le stator est de préférence imprégné d'une résine époxy, d'un vernis polyesterimide ou d'une silicone.

Le stator comporte de préférence une feuille d'un isolant à base d'aramide, d'une résine fluorée, notamment de PTFE, ou de PEEK, autour des bobinages de phase, dans les encoches.

Le stator peut comporter des gaines thermorétractables en matière polyoléfine, de repérage des phases.

Les faisceaux de conducteurs électriques sont de préférence maintenus à l'extérieur des encoches par une ficelle en aramide.

Par « majoritairement en aluminium », il faut comprendre une teneur massique en aluminium du matériau métallique conducteur d'au moins 50%, mieux 80% encore mieux 95%. De préférence, le conducteur électrique est composé en totalité d'aluminium.

L'invention a encore pour objet un moteur électrique comportant un stator selon l'invention, tel que défini ci-dessus.

L'invention a encore pour objet un compresseur fonctionnant avec de l'ammoniac comme fluide réfrigérant, comportant un moteur selon l'invention.

Ce compresseur est de préférence semi-hermétique, de type piston, scroll, vis ou centrifuge, l'ammoniac étant utilisé en tant que fluide caloporteur dans l'installation frigorifique.

L'invention pourra être mieux comprise à la lecture de la description détaillée qui va suivre, d'exemples de mise en oeuvre non limitatifs de celle-ci, et à l'examen du dessin annexé, sur lequel :
- La figure 1 représente de façon schématique en section, un exemple de fil conducteur selon l'invention,
- la figure 2 illustre le remplissage d'une encoche du stator,
- la figure 3 représente schématiquement un moteur selon l'invention, et
- la figure 4 représente schématiquement un compresseur selon l'invention.

### Fil conducteur

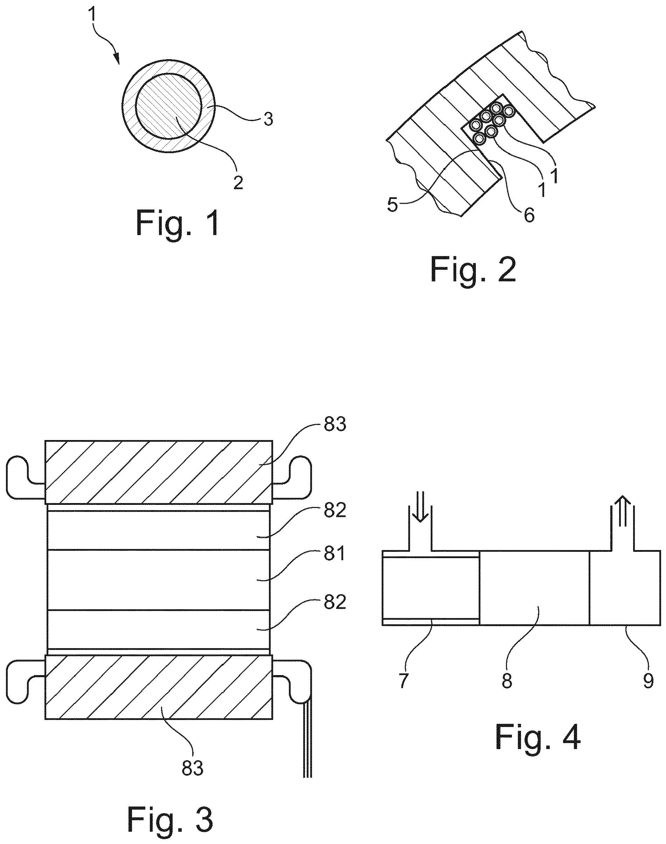

On a représenté à la figure 1 un exemple de fil conducteur selon l'invention. Ce fil conducteur 1 comporte un conducteur électrique métallique 2 et un revêtement isolant 3.

Le conducteur électrique est réalisé principalement à partir d'aluminium, voire est composé exclusivement d'aluminium.

Sa section peut être circulaire ou non, notamment carrée ou rectangulaire, ce qui peut permettre de réaliser le cas échéant un bobinage rangé, de meilleur coefficient de remplissage.

La section du conducteur électrique va par exemple de 1 à 7 mm², selon la puissance du moteur.

Le revêtement isolant 3 est à base de PAEK, mieux de PEEK.

Le revêtement peut être composé entièrement de PEEK.

Le fil peut être fabriqué par un procédé d'extrusion. Les tolérances sur le diamètre extérieur du fil isolé sont de +/-15µm.

On peut mélanger le cas échéant le PAEK à d'autres polymères comme du polyamideimide ou bien du poly(sulfure de phénylène) PPS , seul ou bien mélangé à du polyphénylsulfone polyoléfines polyalcènes (PPSU) ou du polyéthersulfone (PESU), ou tout autre résine ayant une température de transition vitreuse (*T_{g}*) supérieure à 150°C.

L'épaisseur du revêtement est comprise entre 30 et 100 µm, préférentiellement entre 30 et 50 µm.

### Stator

Le stator comporte un circuit magnétique qui peut être de tout type, comportant des encoches dans lesquelles sont reçus les bobinages de phases.

On a représenté à la figure 2 une telle encoche 5 et une partie des fils conducteurs 1 reçus à l'intérieur.

Le nombre d'encoches dépend de la polarité du moteur. Ce dernier peut être synchrone ou asynchrone, étant de préférence synchrone. Le nombre de pôles va par exemple de 2 à 8. La puissance du moteur va par exemple de 0,5 à 400 kW.

L'imprégnation du stator peut être réalisée à l'aide d'une résine époxy d'enrobage ou de d'imprégnation. Elle peut aussi être réalisée avec des vernis polyesterimide ou silicone.

L'isolation des encoches et des phases peut se faire avec des feuilles 6 d'un isolant, par exemple de papiers aramide, PTFE ou PEEK.

Le ficelage des fils conducteurs peut être réalisé avec une ficelle aramide.

Le repérage des phases peut se faire à l'aide de gaine thermorétractable polyoléfine.

On a représenté sur la figure 3 un moteur qui comprend un stator 83 selon l'invention, un rotor 81 avec des pôles 82.

Sur la figure 4 est représenté un compresseur comprenant un moteur 8 selon l'invention, avec un étage d'entrée 7 et une sortie 9.

### Essais comparatifs

Plusieurs essais ont été réalisés avec un fil d'aluminium revêtu d'épaisseurs d'isolant différentes.

**Tableau 1**

| | | Tension de claquage (kV) | | | | |
|---|---|---|---|---|---|---|
| Fil | Rayon d'isolation (mm) | Avant vieillissement à l'ammoniac | Après vieillissement à l'ammoniac | Choc thermique | Abrasion | Remplissage (%) |
| Isolant n°1 | 0,407 | >15 | >15 | OK | OK | 19,9 |
| Isolant n°2 | 0,373 | >15 | >15 | OK | OK | 25,2 |
| Isolant n°3 | 0,232 | >15 | >15 | OK | OK | 29,7 |
| Isolant n°4 | 0,075 | 8 | 11,5 | OK | OK | 50,1 |
| Isolant standard | 0,040 | 5 | 0 | OK | OK | 50-60 |

Les isolants 1 à 4 sont constitués de PEEK de différentes épaisseurs.

L'isolant standard est constitué de cuivre émaillé en PEI (Polyesterimide) /PAI (Polyamide-imide) On voit que l'isolant n°4, conforme à l'invention, conserve une bonne résistance mécanique et électrique après vieillissement au contact de l'ammoniac ainsi qu'un bon coefficient de remplissage, supérieur à 50%.

## Revendications

1. Stator (83) de moteur électrique, comportant au moins un bobinage d'un fil d'un conducteur électrique composé majoritairement d'aluminium recouvert d'une épaisseur de 30 à 100 microns d'un isolant comportant au moins un polymère choisi parmi les polyaryléthercétones (PAEK).

2. Stator selon la revendication 1, l'isolant comportant au moins du polyétheréthercétone (PEEK).

3. Stator selon l'une des revendications précédentes, le taux de remplissage des encoches du stator étant meilleur que 50%.

4. Stator selon l'une quelconque des revendications précédentes, étant imprégné d'une résine époxy, d'un vernis polyesterimide ou d'une silicone.

5. Stator selon l'une quelconque des revendications précédentes, comportant une feuille (6) d'un isolant à base d'aramide, d'une résine fluorée, notamment de PTFE, ou de PEEK, autour des bobinages de phase.

6. Stator selon l'une quelconque des revendications précédentes, le conducteur électrique étant composé en totalité d'aluminium.

7. Moteur électrique comportant un stator (83) selon l'une quelconque des revendications précédentes.

8. Compresseur fonctionnant avec de l'ammoniac comme fluide réfrigérant, comportant un moteur selon la revendication 7.
